# EUROPÄISCHE PATENTSCHRIFT

(11) **EP 1 925 484 B1**
(45) Veröffentlichungstag und Bekanntmachung des Hinweises auf die Patenterteilung: **10.02.2010**
(21) Anmeldenummer: 07021960.5
(22) Anmeldetag: 13.11.2007
(51) Int. Cl.: B60J 7/20

(54) **Cabriolet**
Convertible
Cabriolet

(30) Priorität: 23.11.2006 DE 102006055190
(43) Veröffentlichungstag der Anmeldung: 28.05.2008
(73) Patentinhaber: Dr. Ing. h.c. F. Porsche Aktiengesellschaft, 70435 Stuttgart (DE)
(72) Erfinder: Armbruster, Reiner, 75417 Muehlacker (DE)

(56) Entgegenhaltungen:
- DE-A1- 4 106 732
- DE-A1- 10 252 987
- DE-A1- 19 813 347
- DE-A1-102004 010 628
- DE-U1- 8 512 489
- JP-A- 6 191 285

## Beschreibung

Die vorliegende Erfindung betrifft eine Cabriolet mit einem im hinteren Bereich des Cabriolets ablegbaren Verdeck mit den Merkmalen des Oberbegriffs des Anspruchs 1.

Aus der DE 10 2004 010 628 A1 ist ein gattungsgemäßes Cabriolet mit einem im hinteren Fahrzeugbereich ablegbaren Verdeck bekannt, das in vollständig geöffneter Stellung unterhalb eines geschlossenen Verdeckkastendeckels gehalten und mit dessen Hilfe in seiner abgelegten Lage fixierbar ist. Hierfür ist dem Verdeckkastendeckel zumindest ein Niederhalter zugeordnet, welcher bei geschlossenem Verdeckkastendeckel eine abwärtsweisende Erstreckungskomponente aufweist, die in ihrer Länge verstellbar ist. Hierdurch können in der Fertigung und bei der Montage des Verdecks auftretende Toleranzen ausgeglichen werden.

Aus der DE 102 52 987 A1 ist ein Cabriolet mit einem versenkbaren Verdeck bekannt, welches mit einem, dieses in Öffnungsstellung aufnehmenden Verdeckkasten versehen ist, der durch einen in der heckseitigen Karoseriestruktur verlaufenden Verdeckkastendeckel verschließbar ist. Zwischen diesem und den im Verdeckkasten ablegbaren Verdeck ist ein auf dieses beim Schließen des Verdeckkastendeckels auflegbarer Niederhalter vorgesehen, der ein am Verdeckkastendeckel abgestütztes Gegenglied und ein mit dem Verdeck bewegbares sowie mit dem Gegenglied in einer zurückgeklappten Verdeckstellung verbindbares Auflageteil aufweist. Hierdurch soll der Niederhalter an eine Schwenk-Schub-Bewegung des Verdeckkastendeckels angepasst werden.

Weitere Niederhalter sind beispielsweise aus der DE 41 06 732 A1 und der DE 198 13 347 C2 bekannt.

Bei herkömmlichen, bekannten Niederhaltern besteht häufig das Problem, dass sich langfristig im Bereich des Kontaktes zwischen dem Niederhalter und einem Verdeckbezug des Verdecks auf letzterem Druck- bzw. Scheuerstellen abzeichnen.

Die vorliegende Erfindung beschäftigt sich mit dem Problem, für ein Cabriolet der gattungsgemäßen Art eine verbesserte oder zumindest eine andere Ausführungsform anzugeben, welche sich insbesondere durch einen, den Verdeckbezug schonenden Niederhalter auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Niederhalter zum Niederhalten des Verdecks parallel zu einer Kontaktebene zwischen einem Verdeckbezug und einem Verdeckkastendeckel so biegeweich auszubilden, dass er eine beim Fahren des Cabriolets auftretende Bewegung des Verdecks bezüglich eines Verdeckkastendeckels mitmacht, so dass zwischen dem Niederhalter und dem Verdeckbezug des Verdecks keine oder nur eine sehr geringe Relativbewegung und damit kein oder nur ein sehr geringer Abrieb entsteht. In Z-Richtung, also im wesentlichen orthogonal zur Kontaktebene, soll der erfindungsgemäße Niederhalter jedoch eine gewisse Dämpfungsarbeit leisten können. Deshalb wurde die Form des erfindungsgemäßen Niederhalters so gewählt, dass dieser Relativbewegungen in X und Y-Richtung, also parallel zur Kontaktebene, deutlich besser aufnehmen kann als Relativbewegungen in Z-Richtung. Im Unterschied zu einem Niederhalter, welcher als Vollkörper ausgebildet ist, weist ein Niederhalter mit einer ringförmigen Kontaktzone eben diese genannten Eigenschaften auf, insbesondere ermöglicht die Ringform die Aufnahme von deutlich mehr Walgarbeit als ein Niederhalter aus einem Vollkörper.

Zweckmäßig weist der Niederhalter eine dem Verdeck zugewandte, reibungsreduzierende Beschichtung auf, die insbesondere aus Polytetrafluorethylen ausgebildet ist. Eine derartige Beschichtung, welche üblicherweise auch unter dem Namen Teflon^{®} bekannt ist, weist einen sehr geringen Reibungskoeffizienten auf sowie eine hohe Beständigkeit gegenüber ätzenden Stoffen, wie Alkoholen, Benzin etc.. Kommt es also trotz der sehr geringen Quersteifigkeit des Niederhalters zu einer Relativbewegung zwischen dem Niederhalter und dem Verdeckbezug, so bewirkt die reibungsreduzierende Antihaftbeschichtung auf dem Niederhalter eine deutlich geringere Reibungsbelastung für den Verdeckbezug. Von großem Vorteil ist hierbei auch, dass bei einer Beschichtung aus Polytetrafluorethylen ein Haftreibungskoeffizient genauso groß ist wie ein Gleitreibungskoeffizient, so dass der Übergang von einem Stillstand zu einer Bewegung ruckfrei und ohne Überwindung einer Haftreibungskraft stattfinden kann.

Bei einer vorteilhaften Weiterbildung der erfindungsgemäßen Lösung weist der Niederhalter eine dem Verdeck zugewandte, reibungsreduzierende Beschichtung auf, die insbesondere aus thermoplastischem Polyurethan (TPU) ausgebildet ist. Eine derartige Beschichtung, beispielsweise bekannt unter dem Namen Desmopan^{®} weist eine glatte und dennoch gut haftende Oberfläche sowie eine hohe Beständigkeit gegenüber ätzenden Stoffen, wie beispielsweise Säuren, Laugen, Benzin, etc., auf. Kommt es dabei zu einer Relativbewegung zwischen dem Verdeckbezug und dem Niederhalter, so haftet die Beschichtung am Verdeckbezug und überträgt die Bewegung in den Niederhalter, der die Relativbewegung durch seine geringe Quersteifigkeit kompensiert.

Bei einer vorteilhaften Weiterbildung der erfindungsgemäßen Lösung ist die Beschichtung, als insbesondere selbstklebende, Folie ausgebildet. Dies bietet den großen Vorteil, dass die Beschichtung einfach, schnell und damit kostengünstig auf dem Niederhalter aufgebracht und mit diesem verbunden werden kann, wodurch die Fertigungskosten des Verdecks bzw. des mit dem Verdeck ausgestalteten Cabriolets gesenkt werden können. Die Beschichtung kann auch mit einer durch Wärme aktivierbaren Klebeschicht ausgeführt sein oder beim Schäumprozess des Niederhalter mit diesem verbunden werden.

Bei einer weiteren vorteilhaften Ausführungsform der erfindungsgemäßen Lösung ist am Verdeckkastendeckel eine reibungsreduzierende Beschichtung angeordnet, die den Niederhalter zumindest teilweise umgibt. Beim Ablegen des Verdecks wirft insbesondere der Verdeckbezug Falten, welche nicht nur mit den Niederhaltern in Kontakt kommen können, sondern auch neben diesen direkt mit dem Verdeckkastendeckel. Um auch in diesem Bereich eine Belastung des Verdeckbezugs durch die Reibung am Verdeckkastendeckel so gering wie möglich zu halten, können derartige kontaktgefährdete Bereiche ebenfalls mit einer reibungsreduzierenden Beschichtung, insbesondere auch mit einer Polytetrafluorethylenbeschichtung oder mit einer thermoplastischen Polyurethanbeschichtung (TPU) versehen werden, wodurch die Lebensdauer des Verdeckbezugs und damit des Verdecks gesteigert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Verdeckkastendeckel mit daran angeordneten, erfindungsgemäßen Niederhaltern,
- Fig. 2: eine Schnittdarstellung durch einen erfindungsgemäßen Niederhalter,
- Fig. 3: eine Draufsicht auf einen erfindungsgemäßen Niederhalter,
- Fig. 4: eine Schnittdarstellung wie in Fig. 2, jedoch bei einer anderen Ausführungsform.

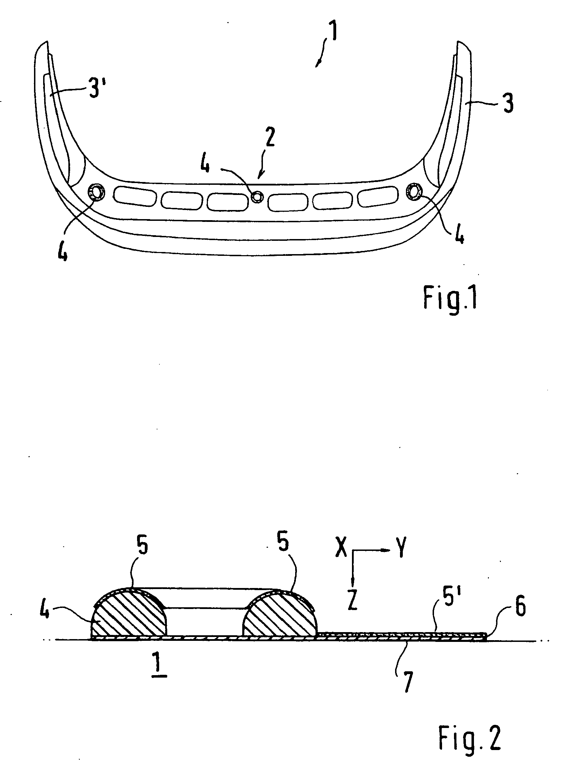

Entsprechend Fig. 1 weist ein Verdeckkastendeckel 1 einen Mittelabschnitt 2 sowie zwei sich daran seitlich anschließenden Seitenabschnitte 3 und 3' auf. Ein derartiger Verdeckkastendeckel 1 verschließt zumindest teilweise einen nicht gezeigten Verdeckkasten bei einem Cabriolet, sofern ein ebenfalls nicht gezeigtes Verdeck geöffnet bzw. in seiner Ablagestellung im Verdeckkasten ist. Das im Verdeckkasten abgelegte Verdeck wird dabei mit Hilfe des Verdeckkastendeckels 1 niedergehalten und in dieser niedergehaltenen Lage fixiert. Zum Niederhalten des Verdecks ist am Verdeckkastendeckel 1 zumindest ein auf das Verdeck auflegbarer Niederhalter 4 angeordnet. Der zumindest eine Niederhalter 4 steht dabei bei geöffnetem Verdeck in direktem Kontakt mit einem Verdeckbezug des Verdecks. Über lange Zeit gesehen, kann es deshalb in diesem Kontaktbereich zwischen dem zumindest einen Niederhalter 4 und dem Verdeckbezug des Verdecks zu Druck- bzw. Abriebstellen am Verdeckbezug kommen, welche einerseits den optischen Eindruck des Verdecks beeinträchtigen und andererseits des Langlebigkeit herabsetzen.

Deshalb ist es wichtig, eine Relativbewegung zwischen dem wenigstens einen Niederhalter 4 und dem Verdeckbezug nach Möglichkeit gänzlich auszuschließen oder zumindest, sofern sich eine derartige Relativbewegung nicht vermeiden lässt, eine Reibung zwischen dem Verdeckbezug und dem Niederhalter 4 so gering wie möglich zu halten. Erfindungsgemäß weist deshalb der zumindest eine Niederhalter 4 eine ringförmige Kontaktzone auf. Durch die Ringform ist der Niederhalter 4 in der Lage, Relativbewegungen in X- und Y-Richtung, also parallel zu einer Kontakt- bzw. Berührungsebene, aufzunehmen, so dass zwischen dem Niederhalter 4 und dem Verdeckbezug keine Relativbewegung und damit kein Abrieb entstehen. Die ringförmige Kontaktzone ermöglicht also aufgrund ihrer geringeren Quersteifigkeit die Aufnahme von mehr Walgarbeit als ein Niederhalter mit einem vollen Querschnitt. In Z-Richtung (vgl. Fig. 2) kann der Niederhalter 4 eine gewohnte Dämpfung bewirken. Die X-Richtung verläuft dabei gemäß Fig. 2 senkrecht zur Bildebene.

Kann eine Relativbewegung zwischen dem Niederhalter 4 und dem Verdeckbezug nicht komplett ausgeschlossen werden, so sollte, wie oben erwähnt, zumindest die Reibung zwischen den beiden Bauteilen so gering wie möglich sein. Dies wird beispielsweisedadurch erreicht, dass der Niederhalter 4 eine dem Verdeckbezug zugewandte, reibungsreduzierende Beschichtung 5 aufweist, die beispielsweise aus Polytetrafluorethylen, kurz auch Teflon^{®} genannt, oder aus thermoplastischem Polyurethan (TPU) ausgebildet ist. Die Beschichtung 5 kann dabei integraler Bestandteil des Niederhalters 4 sein oder eine, insbesondere selbstklebende, Folie sein. Letzteres bietet den Vorteil, dass die Beschichtung 5 einfach, schnell und dadurch kostengünstig am Niederhalter 4 befestigt werden kann. Denkbar sind hierbei auch Klebeschichten, welche mittels Temperatur aktiviert werden, so dass beispielsweise ein Bügeln der Beschichtung 5 auf den Niederhalter 4 möglich ist. Auch vorstellbar ist eine Verbindung zwischen der Beschichtung 5 und dem Niederhalter 4 beim Aufschäumen des letzteren.

Da bei abgelegtem Verdeck ein Kontakt des Verdeckbezugs mit dem Verdeckkastendeckel 1 nicht ausschließlich auf die Niederhalter 4 begrenzt werden kann, sollten auch Bereiche des Verdeckkastendeckels 1 mit einer reibungsreduzierenden Beschichtung 5' ausgestattet sein, in welchen ein direkter Kontakt zwischen Verdeckbezug und Verdeckkastendeckel 1 möglich ist. Denkbar ist hierbei, dass an diesen möglichen Kontaktstellen eine reibungsreduzierende Beschichtung 5' direkt auf dem Verdeckkastendeckel 1 angeordnet wird. Dabei kann die Beschichtung 5' den zumindest einen Niederhalter 4 zumindest teilweise umgeben. Denkbar ist hierbei, dass die, den Niederhalter 4 zumindest teilweise umgebende Beschichtung 5' auf einer sich zwischen dem Niederhalter 4 und dem Verdeckkastendeckel 1 erstreckenden Trägerschicht 7 festgelegt ist, wodurch der Niederhalter 4 über die Trägerschicht 7 am Verdeckkastendeckel 1 befestigt ist.

Auch die Beschichtung 5' kann hierbei aus Polytetrafluorethylen oder aus thermoplastischem Polyurethan (TPU) ausgebildet sein. Von besonderem Vorteil erscheint es, wenn die Beschichtung 5' als, insbesondere selbstklebende, Folie ausgebildet ist, den Niederhalter 4 trägt oder auf der Trägerschicht 7 aufgebracht ist und zusammen mit dem Niederhalter 4 eine vorfertigbare Baugruppe bildet, so dass der Niederhalter 4 einfach, schnell und kostengünstig am Verdeckkastendeckel 1 angeordnet werden kann.

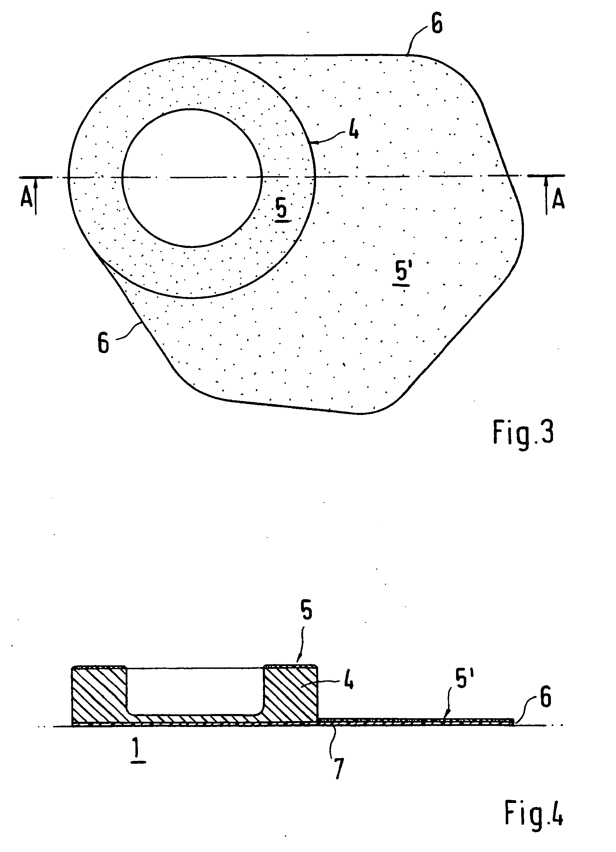

Dabei können beispielsweise Kanten 6 (vgl. Fig. 3) der Beschichtung 5' oder der Trägerschicht 7 zur Ausrichtung an entsprechenden, am Verdeckkastendeckel 1 angeordneten Kanten genutzt werden, was eine Positionierung der Beschichtung 5' bzw. der über die Beschichtung 5' am Verdeckkastendeckel 1 festgelegten Niederhalter 4 erleichtert. Generell kann der Niederhalter 4 auch eine topfförmige Gestalt aufweisen, wie dies in Fig. 4 gezeigt ist.

Ein derartig ring- oder topförmig ausgebildeter Niederhalter 4 mit einer ringförmigen Kontaktzone kann dabei beispielsweise eine Höhe von ca. 15 mm und einen Durchmesser von 20 bis 70 mm aufweisen.

Bei der in Fig. 4 gezeigten Ausführungsform weist der Niederhalter 4 oben erwähnte topfförmige Gestalt mit einer ebenfalls ringförmigen Kontaktzone sowie eine dem Verdeck zugewandte reibungsreduzierende Beschichtung 5, 5' auf, die insbesondere aus thermoplastischem Polyurethan (TPU) ausgebildet ist. Eine solche Beschichtung 5, 5' weist eine glatte und gut haftende Oberfläche sowie eine hohe Beständigkeit gegenüber ätzenden Stoffen, wie beispielsweise Säuren und Laugen auf. Kommt es zu einer Relativbewegung zwischen dem Verdeckbezug und dem Niederhalter 4, so haftet die Beschichtung 5 am Verdeckbezug und überträgt die Bewegung in den Niederhalter 4, der die Relativbewegung durch seine geringe Quersteifigkeit kompensiert. Denkbar sind natürlich auch Kombinationen mehrerer unterschiedlicher Beschichtungen 5, 5' auf einem Niederhalter 4, ebenso wie unterschiedliche Formen von Niederhalterkörper (vgl. Fig. 2 und Fig. 4), beispielsweise mit abgerundeter oder ebener Oberfläche.

## Patentansprüche

1. Cabriolet mit einem im hinteren Bereich des Cabriolets ablegbaren Verdeck,
- das in vollständig geöffneter Stellung in einem Verdeckkasten aufgenommen ist, der durch einen Verdeckkastendeckel (1) zumindest teilweise verschließbar ist,
- wobei das abgelegte Verdeck mit Hilfe des Verdeckkastendeckels (1) niedergehalten und in dieser niedergehaltenen Lage fixiert ist,
- wobei dem Verdeckkastendeckel (1) hierfür zumindest ein auf das Verdeck auflegbarer Niederhalter (4) zugeordnet ist,
**dadurch gekennzeichnet,**
**dass** der Niederhalter (4) eine ringförmige Kontaktzone aufweist.

2. Cabriolet nach Anspruch 1,
**dadurch gekennzeichnet,**
**dass** der Niederhalter (4) eine dem Verdeck zugewandte, reibungsreduzierende Beschichtung (5) aufweist, die insbesondere aus Polytetrafluorethylen oder aus thermoplastischem Polyurethan (TPU) ausgebildet ist.

3. Cabriolet nach Anspruch 2,
**dadurch gekennzeichnet,**
**dass** die Beschichtung (5) als, insbesondere selbstklebende, Folie ausgebildet ist.

4. Cabriolet nach einem der Ansprüche 1 bis 3,
**dadurch gekennzeichnet,**
**dass** am Verdeckkastendeckel (1) eine reibungsreduzierende Beschichtung (5') angeordnet ist, die den Niederhalter (4) zumindest teilweise umgibt.

5. Cabriolet nach Anspruch 4,
**dadurch gekennzeichnet,**
- **dass** sich eine, den Niederhalter (4) zumindest teilweise umgebende Trägerschicht (7) auch zwischen dem Niederhalter (4) und dem Verdeckkastendeckel (1) erstreckt, wodurch der Niederhalter (4) über die Trägerschicht (7) am Verdeckkastendeckel (1) festgelegt ist,
- **dass** die Beschichtung (5') aus Polytetrafluorethylen oder aus thermoplastischem Polyurethan (TPU) ausgebildet ist,
- **dass** die Beschichtung (5') und/oder die Trägerschicht (7) als, insbesondere selbstklebende, Folie ausgebildet ist.

6. Cabriolet nach Anspruch 5,
**dadurch gekennzeichnet,**
**dass** die den Niederhalter (4) tragende Trägerschicht (7) und der Niederhalter (4) selbst eine vorfertigbare Baugruppe bilden.

## Claims

1. Convertible with a soft top capable of being deposited in the rear region of the convertible,
- which soft top is received, in the fully open position, in a soft-top box which is at least partially closable by means of a soft-top box lid (1),
- the deposited soft top being held down and fixed in this held-down position with the aid of the soft-top box lid (1),
- the soft-top box lid (1) being assigned for this purpose at least one holding-down device (4) capable of being laid onto the soft top,
**characterized in that**
the holding-down device (4) has an annular contact zone.

2. Convertible according to Claim 1,
**characterized in that**
the holding-down device (4) has a friction-reducing coating (5) which faces the soft top and which is formed, in particular, from polytetrafluoroethylene or from thermoplastic polyurethane (TPU).

3. Convertible according to Claim 2,
**characterized in that** the coating (5) is formed as an, in particular, self-adhesive film.

4. Convertible according to one of Claims 1 to 3, **characterized in that** a friction-reducing coating (5') is arranged on the soft-top box lid (1) and at least partially surrounds the holding-down device (4).

5. Convertible according to Claim 4, **characterized**
- **in that** a carrier layer (7) at least partially surrounding the holding-down device (4) also extends between the holding-down device (4) and the soft-top box lid (1), with the result that the holding-down device (4) is secured to the soft-top box lid (1) via the carrier layer (7),
- **in that** the coating (5') is formed from polytetrafluoroethylene or from thermoplastic polyurethane (TPU), and
- **in that** the coating (5') and/or the carrier layer (7) are/is formed as an, in particular, self-adhesive film.

6. Convertible according to Claim 5, **characterized in that** the carrier layer (7) carrying the holding-down device (4) and the holding-down device (4) itself form a prefabricatable assembly.

## Revendications

1. Cabriolet avec une capote pouvant être rangée dans la zone arrière du cabriolet ;
ladite capote étant logée dans la position entièrement ouverte dans un caisson de rangement de capote pouvant être fermé au moins en partie par un couvercle de caisson de rangement de capote (1) ;
la capote rangée étant abaissée et fixée dans cette position abaissée à l'aide du couvercle de caisson de rangement de capote (1) ;
au moins un dispositif d'abaissement (4) pouvant être placé sur la capote étant associé au couvercle de caisson de rangement de capote (1) à cette fin ; **caractérisé en ce que** le dispositif d'abaissement (4) comporte une zone de contact de forme annulaire.

2. Cabriolet selon la revendication 1, **caractérisé en ce que** le dispositif d'abaissement (4) comporte un revêtement (5) réduisant les frottements orienté vers la capote, qui est réalisé notamment en polytétrafluoréthylène ou en polyuréthane thermoplastique (PUT).

3. Cabriolet selon la revendication 2, **caractérisé en ce que** le revêtement (5) prend la forme d'un film, notamment autocollant.

4. Cabriolet selon l'une quelconque des revendications 1 à 3, **caractérisé en ce qu'**un revêtement (5') réduisant les frottements est disposé au niveau du couvercle de caisson de rangement de capote (1), ledit revêtement entourant au moins en partie le dispositif d'abaissement (4).

5. Cabriolet selon la revendication 4, **caractérisé en ce que** :
une couche de support (7) entourant au moins en partie le dispositif d'abaissement (4) s'étend également entre le dispositif d'abaissement (4) et le couvercle de caisson de rangement de capote (1), faisant que le dispositif d'abaissement (4) est fixé au couvercle de caisson de rangement de capote (1) via la couche de support (7) ;
le revêtement (5') étant réalisé en polytétrafluoréthylène ou en polyuréthane thermoplastique (PUT) ;
le revêtement (5') et/ou la couche de support (7) prenant la forme d'un film, notamment autocollant.

6. Cabriolet selon la revendication 5, **caractérisé en ce que** la couche de support (7) supportant le dispositif d'abaissement (4) et le dispositif d'abaissement (4) forment eux-mêmes un groupe modulaire préalablement préparé.
